Europäisches Patentamt

European Patent Office

Office européen des brevets

(19)

(11) Veröffentlichungsnummer: **0 218 125**
**B1**

(12) **EUROPÄISCHE PATENTSCHRIFT**

(45) Veröffentlichungstag der Patentschrift: **12.09.90**

(21) Anmeldenummer: **86112828.8**

(22) Anmeldetag: **17.09.86**

(51) Int. Cl.⁵: **B 01 D 53/14**, B 01 D 53/18, B 01 J 19/24

(54) **Vorrichtung zum Abscheiden von Wasserdampf, Lösungsmitteln und/oder Schadstoffen aus einem Gasstrom.**

(30) Priorität: **20.09.85 DE 3533595**

(43) Veröffentlichungstag der Anmeldung:
**15.04.87 Patentblatt 87/16**

(45) Bekanntmachung des Hinweises auf die Patenterteilung:
**12.09.90 Patentblatt 90/37**

(84) Benannte Vertragsstaaten:
**AT BE CH DE FR GB IT LI LU NL**

(56) Entgegenhaltungen:
**EP-A-0 066 822**
**EP-A-0 151 431**
**DD-A- 225 052**
**GB-A-2 013 099**
**US-A-1 952 675**

(73) Patentinhaber: **Nitsche, Manfred Dr.**
**Twistering 12c**
**D-2104 Hamburg 92 (DE)**

(72) Erfinder: **Nitsche, Manfred Dr.**
**Twistering 12c**
**D-2104 Hamburg 92 (DE)**

(74) Vertreter: **Schulmeyer, Karl-Heinz, Dr.**
**Kieler Strasse 59a**
**D-2087 Hasloh (DE)**

Courier Press, Leamington Spa, England.

## Beschreibung

Die Erfindung betrifft eine Vorrichtung zum Abscheiden von Wasserdampf, Lösungsmitteln und/oder Schadstoffen aus einem Gasstrom durch direkte Kondensation und/oder Absorption beim Durchleiten des Gasstroms durch eine gekühlte Waschflüssigkeit.

Es sind bereits Vorrichtungen zur Reinigung von lösungsmittel- bzw. schadstoffhaltigen Abgasströmen bekannt, bei denen die Lösungsmittel bzw. Schadstoffe durch Kondensation oder Absorption in geeigneten Waschflüssigkeiten entfernt werden. So ist aus "The Oil and Gas Journal", 31. Juli 1972, Seite 119, bekannt, mit Kohlenwasserstoffdämpfen gesättigte Luft in einem Absorptionssystem mit Rezirkulation so zu behandeln, daß der größte Teil der Kohlenwasserstoffdämpfe vom Luftstrom abgetrennt und zurückgewonnen werden kann. Dabei wird der zu behandelnde Gasstrom nach Entfernen von mitgerissener Flüssigkeit gekühlt und unter Druck so in den Absorber eingeleitet, daß die verdichteten Gase unter der Flüssigkeitsoberfläche der Waschflüssigkeit in den Absorber eintreten. Die Gase werden durch einen Gasverteilungsstab in Form von Blasen in die Flüssigkeit gedrückt und steigen rasch durch die Flüssigkeit in den oberen Teil des Absorbers. Dort werden die aufsteigenden Gase weiter mit einem massiven Sprühstrahl kleiner Tropfen im Gegenstrom gewaschen. Diese Anlage ist zwar wirksam, jedoch sehr aufwendig. Durch die stets in den Gasströmen enthaltene Feuchtigkeit können leicht Gefrierprobleme in dem Absorptionssystem auftreten; zu ihrer Vermeidung werden teure Luftabscheider vorgeschlagen.

Eine Vorrichtung zur Rückgewinnung von Lösungsmitteln aus wasserdampfhaltiger Abluft von Trockenreinigungsmaschinen wird in der DE—C—27 01 938 beschrieben. Bei dieser für einen speziellen Zweck entwickelten Vorrichtung wird die Abluft in einem geschlossenen Kreislauf geführt und durch ein gekühltes Tauchbad hindurchgedrückt, das teilweise mit dem rückzugewinnenden Lösungsmittel gefüllt ist. Das sich infolge der starken Kühlung in dem Tauchbad meist in Form von Eiskristallen abscheidende Wasser wird zusammen mit dem durch Kondensation gewonnenen Lösungsmittel an einem Überlauf abgezogen. Hierbei kann es insbesondere bei Kühltemperaturen, die weit unter dem Gefrierpunkt des Wassers und u.U. unter dem Gefrierpunkt des Lösungsmittels liegen, durch ausgeschiedene Feststoffe zur Verstopfung des Überlaufes und damit zu dessen Blockierung kommen. Ein weiterer Nachteil besteht darin, daß die ausgeschiedenen Feststoffe leicht nach unten absinken und dabei die aufsteigenden Gasblasen in ihrer Bewegung behindern können, was ebenfalls zu Betriebsstörungen führen kann.

Auch in der DE-A-30 12 759 wird eine Einrichtung speziell zur Lösungsmittelrückgewinnung aus der Abluft einer Trockenreinigungsmaschine vorgeschlagen, bei der das in der Abluft enthaltene Lösungsmittel zusammen mit Wasserdampf in einem gekühlten Kondensationslabyrinth kondensiert und das kondensierte Lösungsmittel in einem Abscheider vom Wasser abgetrennt wird. Die Kühlung geht von einem am oberen Ende des Kondensationslabyrinths angeordneten Wärmeaustauscher aus, von dem sich ein Temperaturgefälle in dem Kondensationslabyrinth nach unten hin ausbreitet, wobei die Temperaturen in der Nähe des Wärmeaustauschers bei etwa -30°C und am unteren Ende des Kondensationslabyrinths in der Nähe des Gefrierpunkts des Wassers liegen können. Die Abluft durchströmt das Kondensationslabyrinth von unten nach oben, wobei es kontinuierlich weiter abgekühlt wird. Hierbei können bei einem hohen Feuchtigkeitsgehalt der Abluft und bei einer relativ hohen Strömungsgeschwindigkeit der feuchtigkeitsbeladenen Abluft Eisablagerungen im Kondensationslabyrinth auftreten, die zu Funktionsstörungen der Anlage führen können.

Aus der DD-A-225 052 wird im Zusammenhang mit einem verfahren zum Betreiben von Rohrbündel-Kontaktapparaten (nachfolgend Absorber genannt) im Blasenregime eine Vorrichtung beschrieben, die aus mehreren, vorzugsweise zwei Absorbern besteht, die vollständig geflutet sowie gasseitig in Reihenschaltung und flüssigkeitsseitig in Parallelschaltung betrieben werden. Diese Absorber sind mit Einzelrohrbegasung und separater Kühlung ausgerüstet, wobei der größere Teil der Rohre mit hoher Intensität und der restliche Teil der Rohre mit relativ geringer Intensität bzw. nicht begast wird, um zwischen den unterschiedlich stark begasten Rohren eine Zirkulationsströmung der Flüssigphase zu erzeugen. Die im Kreislauf befindliche Flüssigphase wird etwa zu gleichen Teilen in jeden der Absorber dosiert. Im ersten Absorber befindet sich ein über die gesamte Höhe des Apparates durchgängiges Rohrbündel, wogegen im zweiten Absorber drei Rohrbündelabschnitte übereinander angeordnet sind, zwischen denen sich Leerräume befinden. Im ersten Absorber werden die Gasphase und die Flüssigphase im Gleichstrom geführt, im zweiten Absorber im Gegenstrom. Da die auf den freien Rohrquerschnitt bezogene Gasphasengeschwindigkeit über der Blasenaufstiegsgeschwindigkeit liegt, wird die Flüssigkeit in den begasten Rohren mit dem Gasstrom nach oben gerissen, während sie durch die unbegasten Rohre wieder abwärts strömt. Die dabei aus dem Gasstrom absorbierten Schadstoffe können in einer nachfolgenden Desorptionsstufe wieder zurückgewonnen werden.

Diese bekannte Vorrichtung wurde speziell zur Behandlung von explosiblen Gasgemischen entwickelt, die möglichst vollständig absorbiert werden sollen. Durch ihre Konstruktion soll die Bildung größerer zusammenhängender Gasräume verhindert werden, wodurch die Konstruktion verhältnismäßig aufwendig ist. Bei hohen Feuchtigkeitsgehalten des zu reinigenden Gasstroms kann die Funktion der Rohrbündelsysteme durch Eisbildung und Eisablagerung empfindlich gestört werden.

Vorliegender Erfindung liegt die Aufgabe zugrunde, eine Vorrichtung zur Reinigung eines mit dampf oder gasförmigen Schadstoffen beladenen Gasstroms durch direkte Kondensation und Absorption zu schaffen, bei dem die vorstehend beschriebenen Nachteile der bisher bekannten Vorrichtungen ganz oder weitgehend vermieden werden können und mit dem es möglich ist, auch Gasströme mit einem relativ hohen Wasserdampf- und/oder Feststoffanteil bei Temperaturen unter 0°C, die für eine praktisch vollständige Abtrennung der Schadstoffe und Lösungsmittel im allgemeinen günstiger sind, zu reinigen und dabei gegebenenfalls die Lösungsmittelanteile zurückzugewinnen, ohne daß es hierbei zu Schwierigkeiten durch Eisbildung und/oder Feststoffablagerungen auf den Kühlflächen und in den Zu- und Ableitungsrohren mit den damit verbundenen Nachteilen durch Rohrverstopfungen und einem erheblich verschlechterten Wärmeübergang kommt.

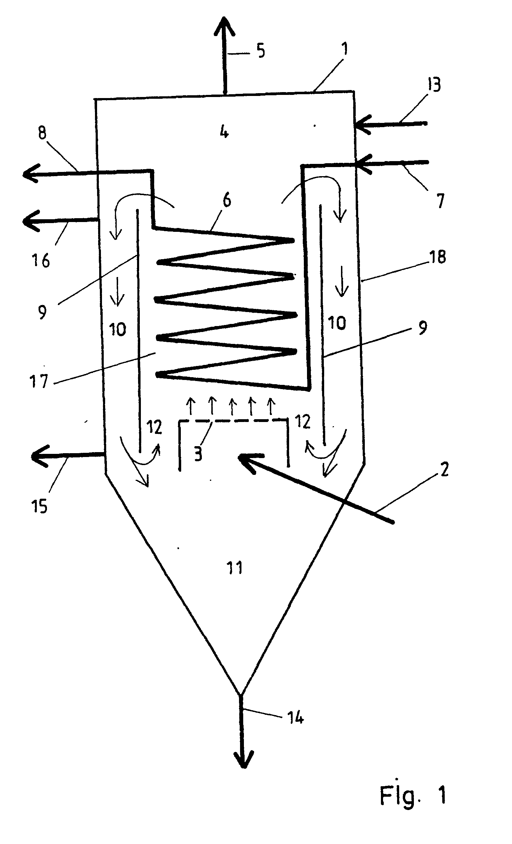

Diese Aufgabe wird erfindungsgemäß gelöst durch eine Vorrichtung zum Abscheiden von Wasserdampf, Lösungsmitteln und/oder Schadstoffen aus einem Gasstrom durch direkte Kondensation und/oder Absorption beim Durchleiten des in Blasen fein zerteilten Gasstroms durch eine gekühlte Waschflüssigkeit in aufsteigender Richtung und Umlenken der von der gekühlten Waschflüssigkeit aufgenommenen Mengen an Wasserdampf, Lösungsmitteln und/oder Schadstoffen, die gegebenenfalls in Form fester Teilchen vorliegen, zusammen mit Waschflüssigkeit in eine vom aufsteigenden Gasstrom räumlich getrennte absteigende Strömungsrichtung. Diese vorrichtung, die in Figur 1 schematisch dargestellt ist, auf die sich die nachfolgenden Bezugsziffern beziehen, ist dadurch gekennzeichnet, daß

(a) ein Einlaßstutzen 2 für den ungereinigten Gasstrom an einem Gaswäscher 1 unterhalb einer Waschzone 17 angeordnet ist, wobei zumindest ein Teil des Bodens der Waschzone 17 als Gasverteiler 3 ausgebildet ist;

(b) die Waschzone 17 in einem Abstand von einer senkrechten Außenwand 18 des Gaswäschers 1 durch eine Trennwand 9 so begrenzt ist, daß zwischen der Trennwand 9 und der Außenwand 18 ein Raum als Ablaufzone 10 ausgebildet ist, der im oberen Teil des Gaswäschers 1 mit der Waschzone 17 und im unteren Teil des Gaswäschers 1 mit einem Abscheidetrichter 11 und über eine zwischen dem unteren Ende der Trennwand 9 und dem Bodenrand der Waschzone 17 bzw. dem Außenrand des Gasverteilers 3 befindliche spaltförmige Öffnung 12 als Durchlaß für die im Kreislauf rückgeführte Waschflüssigkeit mit dem unteren Teil der Waschzone 17 verbunden ist;

(c) eine Kühlvorrichtung mit Kühlrohren oder -flächen 6 in der Waschzone 17 oberhalb des Gasverteilers 3 angeordnet ist und sich wenigstens über die Hälfte der Waschzone 17 erstreckt;

(d) ein Einlaßstutzen 13 für die Waschflüssigkeit im oberen Teil des Gaswäschers 1 im Bereich einer Absetzzone 4 angeordnet ist; und

(e) ein Auslaßstutzen 14 in der Spitze des Abscheidetrichters 11, ein Auslaßstutzen 15 am unteren Ende der Ablaufzone 10 und ein Auslaßstutzen 16 am oberen Ende der Ablaufzone 10 angeordnet sind.

Durch die erfindungsgemäße Vorrichtung wird sichergestellt, daß die optimalen tiefen Temperaturen für die Abscheidung der genannten Stoffe aus der Waschflüssigkeit, die unter 0°C und vorzugsweise im Bereich von -10 bis -25°C liegen, eingestellt und eingehalten werden können, ohne daß die bei diesen tiefen Temperaturen wenigstens teilweise in fester Form anfallenden Abscheidungsprodukte den aufsteigenden Gas- und Waschflüssigkeitsstrom behindern oder blokkieren können. Dies wird dadurch erreicht, daß die von der Waschflüssigkeit in der Waschzone 17 aufgenommenen Produkte ziemlich rasch aus der aufsteigenden Strömung entfernt und zusammen mit Waschflüssigkeit in eine absteigende Strömungsrichtung umgelenkt werden, für die eine von der Waschzone 17 räumlich getrennte Ablaufzone 10 vorgesehen ist. Dadurch kann der gereinigte Gasstrom ungehindert die Waschflüssigkeit nach oben verlassen, während die kondensierten und/oder absorbierten Produkte einschließlich derjenigen, die in fester Form abgeschieden wurden, zusammen mit Waschflüssigkeit nach unten in Richtung auf einen Abscheidebehälter 11 befördert werden. Hier werden die abgeschiedenen Produkte gesammelt und, gegebenenfalls nach Abtrennung von der Waschflüssigkeit, z.B. aufgrund der größeren Dichte der abgeschiedenen Feststoffe und Flüssigkeiten, aus dem Reinigungssystem abgezogen.

Die in der erfindungsgemäßen Vorrichtung eingesetzte Waschflüssigkeit wird so ausgewählt, daß sie die Anteile an Wasser, Lösungsmitteln und/oder Schadstoffen rasch und möglichst vollständig aus dem Gasstrom durch Absorption bzw. Kondensation aufnehmen kann. Vorteilhaft wird eine Waschflüssigkeit eingesetzt, die wenigstens zum Teil aus einem mit dem rückzugewinnenden Lösungsmittel oder Lösungsmittelgemisch gleichen oder chemisch verwandten Produkt besteht, weil dann die Waschflüssigkeit, z.B. Benzin, zusammen mit den absorbierten bzw. kondensierten Lösungsmitteln, z.B. Benzindämpfen, oder Schadstoffen, z.B. Kohlenwasserstoffdämpfen, ohne weitere Zwischenbehandlung direkt weiterverwendet werden kann.

Die Vorrichtung kann diskontinuierlich oder vorzugsweise kontinuierlich betrieben werden. In jedem Falle muß dafür gesorgt werden, daß in der Waschzone 17 durch eine ausreichende Turbulenz ein möglichst guter Wärme- und Stofftransport erreicht wird und Ablagerungen auf den Kühlflächen 6 vermieden werden. Die Waschflüssigkeit wird vorteilhaft nach dem Mammutpumpenprinzip umgewälzt.

Während die erforderliche Abkühlung des zu reinigenden Gasstroms durch direkten Kontakt mit der gekühlten Waschflüssigkeit erfolgt, wird die Waschflüssigkeit selbst zweckmäßigerweise durch indirekte Kühlung mittels Kühlrohren oder -flächen 6 oder anderen geeigneten Kühlvorrichtungen auf die gewünschte Temperatur eingestellt.

Die in den Abscheidebehälter 11 gelangten ausgeschiedenen Feststoffe können, wenn die Teilchen zu grobkörnig oder miteinander verfilzt sind, häufig nur unter Schwierigkeiten aus dem Abscheidebehälter 11 entfernt werden. Deshalb ist in einer bevorzugten Ausführungsform der Vorrichtung vorgesehen, den Abscheidebehälter 11 mit einer Heizvorrichtung zu versehen, mit der die im Abscheidebehälter 11 gesammelten Feststoffe aufgeschmolzen und in flüssiger Form abgezogen werden können.

Mit der Vorrichtung gemäß vorliegender Erfindung wurde überraschend eine Möglichkeit gefunden, das Bedürfnis nach einem möglichst wirkungsvollen, störungsfreien und wirtschaftlichen Verfahren zur Reinigung von insbesondere relativ hoch mit Dampf und/oder gasförmigen Schadstoffen beladenen Gasströmen voll zu befriedigen, nachdem die bisherigen Versuche und Bemühungen zur Verbesserung solcher Reinigungsverfahren, wie eingangs bei der Diskussion des Standes der Technik gezeigt, nicht den gewünschten Erfolg gebracht hatten. Die erfindungsgemäß gefundene Lösung beruht auf einer Anwendung des für den erfindungsgemäßen Zweck sinnvoll abgewandelten Prinzips des Mammutschlaufenreaktors, einem speziellen Blasensäulenreaktor mit Flüssigkeitsumlauf. Solche Blasensäulenreaktoren sind z.B. in Chem.-Ing.-Technik 51 (1979), Seiten 208 - 215, insbesondere Seiten 209 - 210, beschrieben. Sie werden zur großtechnischen Durchführung von chemischen oder biochemischen Reaktionen angewandt, beispielsweise zur synthetischen Erzeugung von organischen Produkten wie Acetaldehyd, Ethylbenzol, Cyclohexan u.dgl. Obwohl einerseits Blasensäulenreaktoren mit Flüssigkeitsumlauf seit langem bekannt sind und andererseits das Bedürfnis für auch unter erschwerten Bedingungen störungsfrei arbeitende Verfahren zur Reinigung von Gasströmen seit geraumer Zeit bestand, wie u.a. aus dem vorstehend diskutierten Stand der Technik hervorgeht, hat man bisher offensichtlich nicht erkannt, daß durch eine sinnvoll abgewandelte Anwendung des Prinzips des Blasensäulenreaktors in einem Verfahren und einer Vorrichtung gemäß vorliegender Erfindung die mit den bisher bekannten Verfahren und Vorrichtungen verbundenen, oben genannten Nachteile praktisch vollständig vermieden werden können.

Die erfindungsgemäße Vorrichtung kann in verschiedenen Ausführungsformen verwirklicht werden. Beispielsweise kann der Gaswäscher aus einem im wesentlichen zylindrisch geformten Behälter bestehen, wodurch auch die in einem Abstand von der Außenwand des Gaswäschers angeordnete Trennwand zylindrisch geformt ist und zwischen Trennwand und Außenwand eine hohlzylinderförmige Ablaufzone gebildet wird. Infolge des kreisförmigen Querschnitts des Gaswäschers ist der daran anschließende Abscheidetrichter konusförmig ausgebildet, und die zylinderförmige Waschzone enthält zweckmäßigerweise eine Kühlvorrichtung in Form einer Kühlrohrspirale. Solche Ausführungsformen arbeiten in der gewünschten Weise und erfüllen die an sie gestellten Erwartungen in hohem Maße.

Wegen der einfacheren, kostensparenden Konstruktion werden solche Ausführungsformen bevorzugt, bei denen der Gaswäscher als quaderförmiger Behälter mit quadratischer oder rechteckiger Grundfläche ausgebildet ist, an den sich ein Abscheidebehälter mit entsprechender quadratischer oder rechteckiger Grundfläche anschließt, wobei der Abscheidebehälter vorzugsweise in einer Trichterrinne ausläuft, die mit ein oder mehreren Auslaßstutzen versehen ist.

Entsprechend sind auch die Einrichtungen im Behälter an die bevorzugte quaderförmige Gestalt angepaßt. So ist in einer bevorzugten Ausführungsform in einem Abstand parallel zu jeweils einer von zwei gegenüberliegenden senkrechten Außenwänden des Gaswäschers jeweils eine Trennwand angeordnet, wobei die beiden Trennwände mit ihren Enden an den beiden anderen sich gegenüberliegenden senkrechten Außenwänden des Gaswäschers anliegen und gegebenenfalls mit ihnen verbunden sind, wodurch eine vordere und eine hintere Ablaufzone gebildet werden, die beide oben und unten offen sind. Eine solche quaderförmige Ausführungsform hat sowohl fertigungstechnische als auch verfahrenstechnische Vorteile. Fertigungstechnisch ist eine quaderförmige Ausführungsform der erfindungsgemäßen Vorrichtung einfacher herzustellen und zu montieren als eine zylindrische Ausführungsform. Beispielsweise sind die Kühlrohre der Kühlvorrichtung in der Waschzone des quaderförmigen Gaswäschers vorzugsweise in Form von horizontal übereinander liegenden Rohrbündeln angeordnet, die einfacher zu fertigen sind als archimedische Kühlspiralen. Diese Konstruktion der Kühlvorrichtung ist raumsparend und besitzt den Vorteil, daß sich mehr Kühlfläche auf gleichem Raum unterbringen läßt. Die Kühlrohre nehmen dadurch eine geringere Höhe ein, so daß auch die Waschflüssigkeit, die die Kühlrohre überdecken soll, eine geringere Flüssigkeitshöhe einnimmt als bei einem zylinderförmigen Gaswäscher. Dies hat den verfahrenstechnischen Vorteil, daß der Gasstrom mit einem geringeren Druck in die Waschflüssigkeit eingeführt, d.h. energiesparender gearbeitet werden kann. Durch die horizontale Lage der Kühlrohrbündel wird außerdem die Fläche für die aufsteigenden Gasblasen gleichmäßiger abgedeckt, so daß unerwünschte Gasströmungsbypässe vermieden werden können. Hierdurch wird eine bessere Effizienz der gesamten Vorrichtung erreicht.

Der Gasverteiler hat die Aufgabe, den aus dem Einlaßstutzen in den unteren Teil des Gaswäschers eintretenden ungereinigten Gasstrom in Form feinzerteilter Blasen über die gesamte Bodenfläche der Waschzone möglichst homogen zu verteilen. Die konstruktiven Ausgestaltungen solcher Gasverteiler sind dem Fachmann bekannt. Vorzugsweise ist in der erfindungsgemäßen Vorrichtung der Gasverteiler in Form einer Glocke oder eines umgedrehten, nach unten offenen Topfes ausgebildet.

Ein solcher glocken- oder topfförmiger Gasverteiler weist über seine Oberfläche verteilt Gasdurchgangsöffnungen auf, die in einer besonders bevorzugten Ausführungsform auf den oberen, im wesentlichen horizontal verlaufenden Teil der Glocke beschränkt sind. Dadurch wird erreicht, daß die im Kreislauf geführte Waschflüssigkeit durch die den Gasverteiler umgebende spaltförmige Öffnung in die Waschzone eintreten kann, ohne daß sie dabei durch den in den Gasverteiler eintretenden Gasstrom merklich gestört wird.

In einer weiteren bevorzugten Ausführungsform der Vorrichtung ist der Abscheidebehälter mit einer Heizvorrichtung versehen.

Um einen möglichst störungsfreien Ablauf des Reinigungsvorganges zu gewährleisten, sind ferner in einer weiteren bevorzugten Ausführungsform der Vorrichtung die Auslaßstutzen, durch die die abgeschiedenen flüssigen und/oder festen Stoffe, gegebenenfalls zusammen mit Waschflüssigkeit, abgezogen werden, niveaugesteuert.

Die Erfindung wird anhand der beigefügten Figuren weiter erläutert. Es zeigen:

Figur 1 eine schematische Darstellung der erfindungsgemäßen Vorrichtung in Seitenansicht im Schnitt;

Figur 2 eine schematische Darstellung einer bevorzugten Ausführungsform der erfindungsgemäßen Vorrichtung in perspektivischer Ansicht;

Figur 3 eine schematische Seitenansicht, teilweise im Querschnitt, der in Figur 2 gezeigten Ausführungsform;

Figur 4 eine schematische Darstellung einer Ausführungsform wie in Fig. 2 zur Veranschaulichung der Anordnung des Gasverteilers;

Figur 5 eine schematische Darstellung einer Ausführungsform wie in Fig. 2 zur Veranschaulichung der Anordnung von Kühlrohrbündeln und Trennwänden.

Wie insbesondere aus den Figuren 1, 2 und 3 ersichtlich, tritt der mit den abzuscheidenden Stoffen, wie Wasserdampf, Lösungsmitteln und/oder Schadstoffen, beladene Gasstrom über den Einlaßstutzen 2 in den Gaswäscher 1 unterhalb der Waschzone 17 ein, wird in einen vorzugsweise glockenförmigen Gasverteiler 3 geführt und dort so verteilt, daß das zu reinigende Gas in Form feiner Gasblasen durch die Gasdurchgangsöffnungen im Gasverteiler 3 in die Waschzone 17 eintreten können. Die Waschflüssigkeit in der Waschzone 17 wird indirekt durch eine Kühlvorrichtung mit Zu- und Ableitungsrohren 7 und 8 und Kühlrohren oder -flächen 6, durch die ein geeignetes Kühlmittel fließt, auf die gewünschte tiefe Temperatur gebracht. Durch direkten Kontakt mit der Waschflüssigkeit wird der aufsteigende Gasstrom gekühlt und dabei der Wasserdampf, die Lösungsmittel und/oder die Schadstoffe zumindest zu einem erheblichen Teil aus dem Gasstrom ausgewaschen und von der Waschflüssigkeit in flüssiger oder fester Form aufgenommen.

Vor Betriebsbeginn wird durch den Einlaßstutzen 13, der sich im oberen Teil des Gaswäschers 1 befindet, die Waschflüssigkeit in den Gaswäscher 1 eingeführt, bis die Waschflüssigkeit in dem Gaswäscher 1 ein vorbestimmtes Niveau erreicht hat. Die während des Betriebs des Gaswäschers 1 zusammen mit den kondensierten und/oder absorbierten Stoffen über die Auslaßstutzen 14, 15 und 16 abgezogene Menge an Waschflüssigkeit wird durch entsprechenden Zulauf an Waschflüssigkeit durch den Einlaßstutzen 13 wieder ersetzt.

Die in flüssiger oder fester Form abgeschiedenen Stoffe werden zusammen mit der kalten Waschflüssigkeit aus der Waschzone 17 in Richtung der in Figur 1 gezeigten Pfeile aus der aufsteigenden Richtung in eine absteigende Richtung umgelenkt, wobei sie in die zwischen der Trennwand 9 und der Außenwand 18 des Gaswäschers 1 angeordnete Ablaufzone 10 geführt werden. Am Ende der Ablaufzone 10 tritt ein Teil der Waschflüssigkeit durch eine spaltförmige Öffnung 12 wieder in die Waschzone 17 ein, während die abgeschiedenen Stoffe, die in fester oder flüssiger Form in der Waschflüssigkeit vorliegen, in Richtung auf den Abscheidebehälter 11 befördert und hier gesammelt werden. Falls die abgeschiedenen Stoffe eine größere Dichte als die Waschflüssigkeit haben, kann im Abscheidebehälter 11 eine mehr oder weniger gute Trennung von Waschflüssigkeit und abgeschiedenen Stoffen erfolgen. In jedem Falle werden die abgeschiedenen Stoffe, gegebenenfalls zusammen mit Waschflüssigkeit, aus den Auslaßstutzen 14, 15 und 16 aus dem Reinigungssystem abgezogen.

Durch die räumliche Trennung des die abgeschiedenen Stoffe enthaltenden flüssigen, im wesentlichen gasfreien Ablaufstroms in der Ablaufzone 10 von dem in Blasen fein zerteilten, durch die gekühlte Waschflüssigkeit aufsteigenden, zu reinigenden Gasstrom in der Waschzone 17 wird erfindungsgemäß erreicht, daß die abgeschiedenen flüssigen und festen Stoffe nicht gegen den aufsteigenden Gasstrom nach unten in Richtung auf den Abscheidebehälter 11 transportiert werden müssen, sondern daß diese Stoffe einen eigenen, gegenstromfreien Raum haben, so daß eine gegenseitige Behinderung der gegenläufigen Ströme mit den daraus resultierenden Schwierigkeiten und Störungen praktisch vollständig vermieden wird. Der gereinigte Gasstrom kann auf diese Weise ungehindert in die Absetzzone 4 im oberen Teil des Gaswäschers 1 und von dort in den Auslaßstutzen 5 eintreten, von wo er aus dem Reinigungssystem abgezogen wird.

In einer vorteilhaften und daher bevorzugten Ausführungsform der erfindungsgemäßen Vorrichtung ist der Abscheidebehälter 11 mit einer in den Figuren nicht dargestellten Heizvorrichtung versehen. Dadurch ist die Möglichkeit gegeben, die sich im Abscheidebehälter 11 ansammelnden abgeschiedenen Feststoffe aufzuschmelzen und in flüssiger Form abzuziehen. Es wird dadurch verhindert, daß grobteilige Feststoffe den Auslaßstutzen 14 verstopfen.

Der störungsfreie Ablauf des Reinigungsvorganges in dem erfindungsgemäßen Gaswäscher 1 kann ferner auch dadurch abgesichert werden, daß in einer weiteren bevorzugten Ausführungsform der Vorrichtung die Auslaßstutzen 14, 15 und/oder 16 niveaugesteuert sind, so daß ein Überlaufen des Gaswäschers noch sicherer vermieden werden kann.

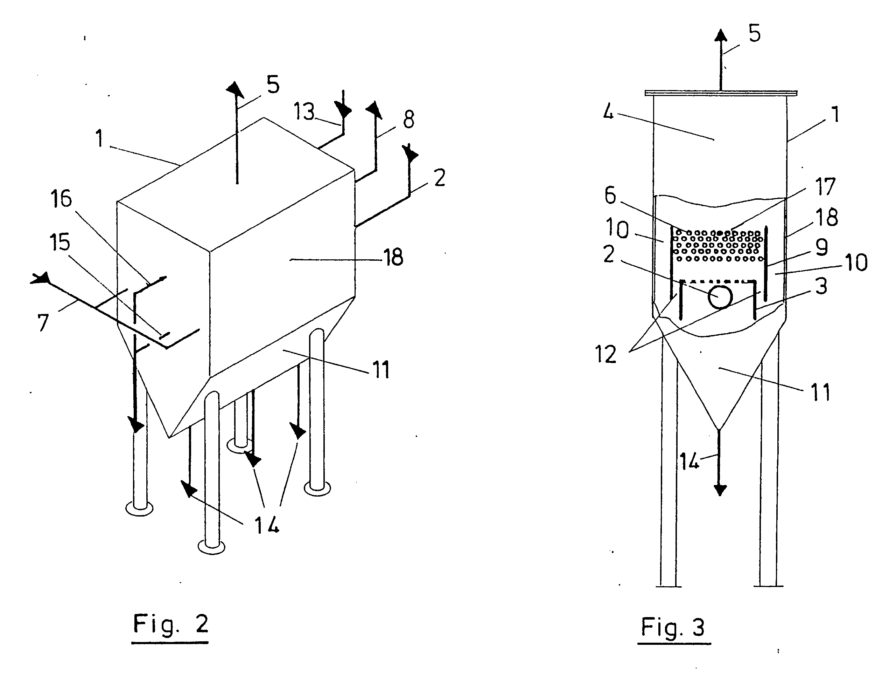

Während die Figur 1 eine schematische Darstellung der erfindungsgemäßen Vorrichtung wiedergibt, die an keine besondere Ausführungsform gebunden ist und daher das dieser Vorrichtung zugrundeliegende allgemeine Prinzip wiedergibt, daß z.B. in einem im wesentlichen zylinderförmigen Gaswäscher 1 realisiert werden kann, zeigen die Figuren 2 bis 5 bevorzugte Ausführungsformen der erfindungsgemäßen Vorrichtung mit einem quaderförmig gestalteten Gaswäscher 1. Solche Ausführungsformen besitzen gegenüber zylinderförmigen Ausführungsformen sowohl fertigungstechnische als auch verfahrenstechnische Vorteile, wie oben bereits ausgeführt wurde. Figur 2 zeigt eine perspektivische Ansicht einer solchen bevorzugten Ausführungsform mit den verschiedenen Eingängen und Ausgängen in schematischer Darstellung. Der ungereinigte Gasstrom tritt über den Einlaßstutzen 2 in den Gaswäscher 1 ein, der gereinigte Gasstrom über den Auslaßstutzen 5 aus dem Gaswäscher 1 aus. Durch den Einlaßstutzen 13 wird Waschflüssigkeit in den Gaswäscher 1 je nach Bedarf eingelassen, während die Leitungen 7 und 8 die Zu- und Ableitungsrohre für das Kühlmittel darstellen, das durch die in Figur 3 im Querschnitt schematisch dargestellten Kühlrohre 6 innerhalb der Waschzone 17 fließt, wobei die Kühlrohre 6 vorzugsweise in Form von horizontal übereinander liegenden Rohrbündeln vorliegen. Aus den Auslaßstutzen 14, 15 und 16 werden die abgeschiedenen flüssigen und festen Stoffe aus dem Gaswäscher 1 entfernt.

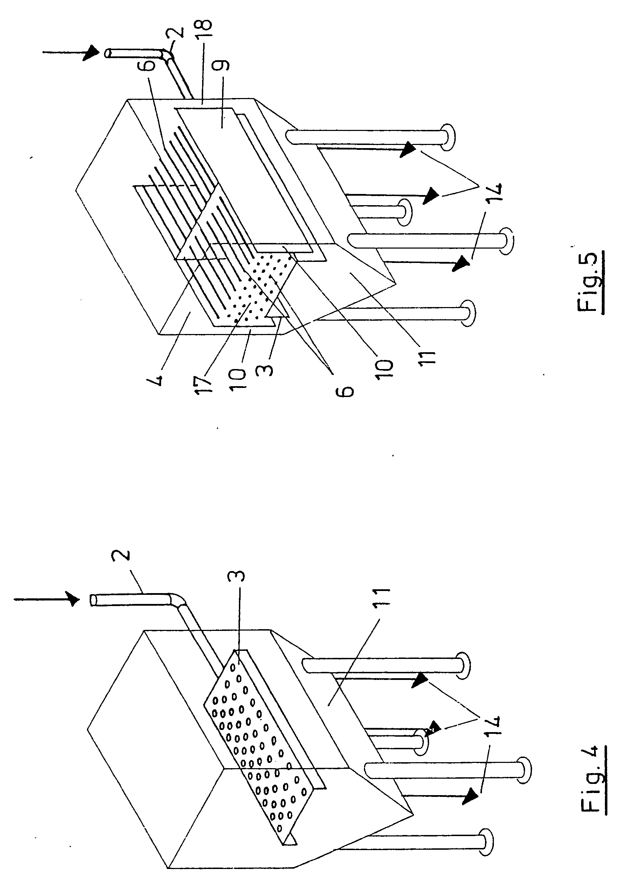

In der Figur 3 ist im Querschnitt das Innere der in Figur 2 dargestellten Ausführungsform schematisch dargestellt. Der ungereinigte Gasstrom tritt durch den Einlaßstutzen unterhalb der Waschzone 17 in den Gaswäscher 1 ein. Durch den Gasverteiler 3, dessen Form und Anordnung im Gaswäscher besonders deutlich aus Figur 4 hervorgeht, in der der besseren Übersicht wegen sämtliche anderen Vorrichtungselemente weggelassen sind, wird der zu reinigende Gasstrom in Form feinzerteilter Blasen homogen verteilt in die Waschzone 17 eingeführt, die von den horizontal übereinander liegenden Kühlrohrbündeln 6 durchsetzt ist. In Figur 5 ist die Anordnung der Kühlrohrbündel 6 über dem Gasverteiler 3 und zwischen den Trennwänden 9 besonders gut zu erkennen, wobei der besseren Übersicht wegen weitere Vorrichtungselemente im und am Gaswäscher 1 weggelassen sind. Besonders deutlich zu erkennen sind in Figur 3 und 5 die vordere und hintere Waschzone 10, die zwischen den Trennwänden 9 und den senkrechten Außenwänden 18 des Gaswäschers 1 angeordnet sind und mit der Waschzone 17 im oberen Teil direkt und im unteren Teil über die spaltförmigen Öffnungen 12 verbunden sind. Im unteren Teil des Gaswäschers 1 schließt sich ein Abscheidebehälter 11 an, der vorzugsweise in eine Trichterrinne ausläuft, die mit ein (Figur 3) oder mehreren (in Figur 2, 4 und 5 mit 3) Auslaßstutzen 14 versehen ist.

**Patentansprüche**

1. Vorrichtung zum Abscheiden von Wasserdampf, Lösungsmitteln und/oder Schadstoffen aus einem Gasstrom durch direkte Kondensation und/oder Absorption beim Durchleiten des in Blasen fein zerteilten Gasstroms durch eine gekühlte Waschflüssigkeit in aufsteigender Richtung und Umlenken der von der gekühlten Waschflüssigkeit aufgenommenen Mengen an Wasserdampf, Lösungsmitteln und/oder Schadstoffen, die gegebenenfalls in Form fester Teilchen vorliegen, zusammen mit Waschflüssigkeit in eine vom aufsteigenden Gasstrom räumlich getrennte absteigende Strömungsrichtung, dadurch gekennzeichnet, daß

(a) ein Einlaßstutzen (2) für den ungereinigten Gasstrom an einem Gaswäscher (1) unterhalb einer Waschzone (17) angeordnet ist, wobei zumindest ein Teil des Bodens der Waschzone (17) als Gasverteiler (3) ausgebildet ist;

(b) die Waschzone (17) in einem Abstand von einer senkrechten Außenwand (18) des Gaswäschers (1) durch eine Trennwand (9) so begrenzt ist, daß zwischen der Trennwand (9) und der Außenwand (18) ein Raum als Ablaufzone (10) ausgebildet ist, der im oberen Teil des Gaswäschers (1) mit der Waschzone (17) und im unteren Teil des Gaswäschers (1) mit einem Abscheidebehälter (11) und über eine zwischen dem unteren Ende der Trennwand (9) und dem Bodenrand der Waschzone (17) bzw. dem Außenrand des Gasverteilers (3) befindliche spaltförmige Öffnung (12) als Durchlaß für die im Kreislauf rückgeführte Waschflüssigkeit mit dem unteren Teil der Waschzone (17) verbunden ist;

(c) eine Kühlvorrichtung mit Kühlrohren oder -flächen (6) in der Waschzone (17) oberhalb des Gasverteilers (3) angeordnet ist und sich wenigstens über die Hälfte der Waschzone (17) erstreckt;

(d) ein Einlaßstutzen (13) für die Waschflüssigkeit im oberen Teil des Gaswäschers (1) im Bereich einer Absetzzone (4) angeordnet ist; und

(e) ein Auslaßstutzen (14) in der Spitze des Abscheidebehälters (11), ein Auslaßstutzen (15) am unteren Ende der Ablaufzone (10) und ein Auslaßstutzen (16) am oberen Ende der Ablaufzone (10) angeordnet sind.

2. Vorrichtung nach Anspruch 1, dadurch gekennzeichnet, daß der Gaswäscher (1) als quaderförmiger Behälter mit quadratischer oder rechteckiger Grundfläche ausgebildet ist, an den sich ein Abscheidebehälter (11) mit entsprechender quadratischer oder rechteckiger Grundfläche anschließt, der in einer Trichterrinne ausläuft, die mit ein oder mehreren Auslaßstutzen (14) versehen ist.

3. Vorrichtung nach Anspruch 2, dadurch gekennzeichnet, daß in einem Abstand parallel zu zwei gegenüberliegenden senkrechten Außenwänden (18) des Gaswäschers (1) jeweils eine Trennwand (9) angeordnet ist, wobei die beiden Trennwände (9) mit ihren Enden an den beiden anderen sich gegenüberliegenden senkrechten Außenwänden (18) des Gaswäschers (1) anliegen und gegebenenfalls mit ihnen verbunden sind, wodurch eine vordere und eine hintere oben und unten offene Ablaufzone (10) gebildet werden.

4. Vorrichtung nach einem der Ansprüche 2 und 3, dadurch gekennzeichnet, daß die Kühlrohre (6) der Kühlvorrichtung in der Waschzone (17) in Form von horizontal übereinander liegenden Rohrbündeln vorliegen.

5. Vorrichtung nach einem der Ansprüche 1 bis 4, dadurch gekennzeichnet, daß der Gasverteiler (3) in Form einer Glocke ausgebildet ist, die nach unten offen ist.

6. Vorrichtung nach Anspruch 5, dadurch gekennzeichnet, daß der glockenförmige Gasverteiler (3) nur in dem oberen, im wesentlichen horizontal verlaufenden Teil Gasdurchgangsöffnungen aufweist.

7. Vorrichtung nach den Ansprüchen 1 bis 6, dadurch gekennzeichnet, daß der Abscheidebehälter (11) mit einer Heizvorrichtung versehen ist.

8. Vorrichtung nach den Ansprüchen 1 bis 7, dadurch gekennzeichnet, daß die Auslaßstutzen (14), (15) und/oder (16) niveaugesteuert sind.

## Revendications

1. Dispositif d'élimination de vapeur d'eau, de solvants et/ou de substances nocives d'un courant gazeux, par condensation directe et/ou absorption lors du passage ascendant du courant gazeux, finement divisé en bulles, à travers un liquide de lavage refroidi, et déviation de la vapeur d'eau, des solvants et/ou des substances nocives, se présentant éventuellement sous forme de particules solides et collectés par le liquide laveur, conjointement avec du liquide de lavage dans une direction d'écoulement descendante spatialement séparée du courant de gaz ascendant, caractérisé en ce que

(a) une tubulure d'admission (2) du courant gazeux souillé est assujettie à un laveur de gaz (1) sous une zone de lavage (17), une partie au moins du fond de la zone de lavage (17) ayant la forme d'un dispositif distributeur de gaz (3);

(b) la zone de lavage (17) est limitée à distance d'une paroi extérieure verticale (18) du laveur de gaz (1) par une paroi séparatrice (9) de manière à aménager une chambre formant zone d'écoulement (10) entre la paroi séparatrice (9) et la paroi extérieure (18), chambre reliée à la zone de lavage (17) dans la partie supérieure du laveur de gaz (1), à un récipient collecteur (11) dans la partie inférieure du laveur de gaz (1); et à la partie inférieure de la zone de lavage (17) et par une ouverture en forme de fente (12) située entre l'extrémité inférieure de la paroi séparatrice (9) et le bord inférieur de la zone de lavage (17) ou le bord extérieur du distributeur de gaz (3), cette ouverture servant de passage pour le liquide de lavage recyclé en circuit fermé;

(c) un dispositif de refroidissement équipé de tubes ou surfaces de refroidissement (6) est disposé dans la zone de lavage (17) au-dessus du distributeur de gaz (3) et s'étend au moins sur la moitié de la zone de lavage (17);

(d) une tubulure d'admission (13) du liquide de lavage est disposée dans la partie supérieure du laveur de gaz (1) à la portée d'une zone de décantation (4); et

(e) une tubulure d'évacuation (14) est disposée dans la pointe du récipient collecteur (11), une tubulure d'évacuation (15) est disposée à l'extrémité inférieure de la zone d'écoulement (10) et une tubulure d'évacuation (16) est disposée à l'extrémité supérieure de la zone d'écoulement (10).

2. Dispositif selon la revendication 1, caractérisé en ce que le laveur de gaz (1) est aménagé en récipient parallélipipédique aux faces carrées ou rectangulaires, auquel est raccordé un récipient collecteur (11) dont les faces correspondantes sont carrées ou rectangulaires, qui se termine en une gouttière d'entonnoir pourvue d'une ou de plusieurs tubulures d'évacuation (14).

3. Dispositif selon la revendication 2, caractérisé en ce qu'une paroi séparatrice (9) est disposée parallèlement à et à distance de chacune de deux parois extérieures (12) verticales opposées du laveur de gaz (1), dans lequel les deux parois séparatrices (9) jouxtent par leurs extrémités les deux parois extérieures verticales opposées (18) du laveur de gaz (1) et leur sont éventuellement reliées, formant de la sorte des zones d'écoulement (10) antérieure et postérieure, ouvertes tant vers le haut que vers le bas.

4. Dispositif selon l'une des revendications 2 et 3, caractérisé en ce que les tubes de refroidissement (6) du dispositif de refroidissement se présentent dans la zone de lavage (17) sous la forme de faisceaux de tubes superposés horizontalement.

5. Dispositif selon l'une des revendications 1 à 4, caractérisé en ce que le distributeur de gaz (3) est aménagé en forme de cloche ouverte vers le bas.

6. Dispositif selon la revendication 5, caractérisé en ce que le distributeur de gaz en forme de cloche (3) ne présente des ouvertures de passage du gaz que dans sa partie supérieure, sensiblement horizontale.

7. Dispositif selon les revendications 1 à 6, caractérisé en ce que le récipient collecteur (11) est pourvu d'un dispositif de chauffage.

8. Dispositif selon les revendications 1 à 7, caractérisé en ce que les tubulures d'évacuation (14), (15) et/ou (16) sont commandées par le niveau.

## Claims

1. Device for separating steam, solvents and/or harmful substances from a gas flow by direct condensation and/or absorption while passing the gas, which is finely divided into bubbles, in an upward direction through a cooled scrubbing liquid and diverting the quantities of steam, solvents and/or harmful substances, which may possibly be in the form of solid particles, which are taken up by the cooled scrubbing liquid, together with the scrubbing liquid, into a downward direction of flow, spatially separate from the upward gas flow, characterized in that

(a) an inlet pipe connector (2) for the uncleaned gas flow is arranged on a gas scrubber (1) beneath a scrubbing zone (17), such that at least part of the base of the scrubbing zone (17) is constructed as a gas diffuser (3);

(b) the scrubbing zone (17) is limited by a dividing wall (9) set at a distance from a vertical external wall (18) of the gas scrubber (1) such that between the dividing wall (9) and the external wall (18) a space is formed acting as the run-off zone (10) which is connected in the upper part of the gas scrubber (1) with the scrubbing zone (17), and in the lower part of the gas scrubber (1) with a separating vessel (11), and is connected with the lower part of the scrubbing zone (17) by means of a slit-like opening (12) situated between the lower end of the dividing wall (9) and the bottom edge of the scrubbing zone (17) or the outer edge of the gas diffuser (3) which acts as a through-hole for the recycled scrubbing liquid;

(c) a cooling device with cooling pipes or cooling surfaces (6) is arranged in the scrubbing zone (17) above the gas diffuser (3) and extends over at least half of the scrubbing zone (17);

(d) an inlet pipe connector (13) for the scrubbing liquid is arranged in the upper part of the gas scrubber (1) in the region of a settling zone (4); and

(e) an outlet pipe connector (14) is arranged in the point of the separating vessel (11), an outlet pipe connector (15) is arranged on the lower end of the run-off zone (10) and an outlet pipe connector (16) is arranged on the upper end of the run-off zone (10).

2. Device according to claim 1, characterized in that the gas scrubber (1) is formed as a rectangular parallelepiped vessel with a quadratic or rectangular base, to which a separating vessel (11) with a corresponding quadratic or rectangular base connects which drains into a funnel duct which is provided with one or more outlet pipe connectors (14).

3. Device according to claim 2, characterized in that a dividing wall (9) is arranged at a distance parallel to each of two opposing vertical external walls (18) of the gas scrubber (1) such that the two dividing walls (9) lie with their ends on the two other opposing vertical external walls (18) of the gas scrubber (1) and can optionally be connected therewith, whereby a front and a rear run-off zone (10) open to the top and bottom are formed.

4. Device according to one of claims 2 and 3, characterized in that the cooling pipes (6) of the cooling device in the scrubbing zone (17) are in the form of tube bundles lying horizontally one above the other.

5. Device according to one of claims 1 to 4, characterized in that the gas diffuser (3) is constructed in the form of a bell which is open at the bottom.

6. Device according to claim 5, characterized in that the bell-shaped gas diffuser (3) only has gas through-holes in the upper, essentially horizontal part.

7. Device according to claims 1 to 6, characterized in that the separating vessel (11) is provided with a heating device.

8. Device according to claims 1 to 7, characterized in that the outlet pipe connectors (14), (15) and/or (16) are level-controlled.

Fig. 1

Fig. 2

Fig. 3

EP 0 218 125 B1

Fig. 4

Fig. 5